# FASCICULE DE BREVET EUROPEEN

(11) **EP 1 139 697 B1**
(45) Date de publication et mention de la délivrance du brevet: **17.01.2007**
(21) Numéro de dépôt: 01200704.3
(22) Date de dépôt: 26.02.2001
(51) Int. Cl.: H05B 3/84

(54) **Vitrage avec connexion électrique**
Glasscheibe mit elektrischer Verbindung
Window with current feed connector

(30) Priorité: 09.03.2000 BE 20000188
(43) Date de publication de la demande: 04.10.2001
(73) Titulaire: GLAVERBEL, 1170 Bruxelles (BE)
(72) Inventeur: Ledoussal, Ronan, 59128 Flers En Escrebieux (FR); Maza, Christophe, 78630 Orgeval (FR); Lejeune, Pascal, 6532 Ragnies (BE)
(74) Mandataire: Le Vaguerèse, Sylvain Jacques

(56) Documents cités:
- EP-A- 0 607 067
- EP-A- 0 619 691
- WO-A-99/40039
- AT-B- 310 892
- DE-A- 2 719 226
- FR-A- 2 390 882
- FR-A- 2 670 330
- GB-A- 1 598 504
- US-A- 4 029 942
- US-A- 4 707 591
- US-A- 5 260 549

## Description

La présente invention est relative à un mode de connexion entre un ou plusieurs éléments fonctionnels disposés dans, ou sur un vitrage automobile, nécessitant une alimentation électrique, d'une part, et le circuit d'alimentation d'autre part.

Les éléments destinés au chauffage des pare-brise ou des lunettes arrière, sont typiques de ceux pour lesquels les connexions selon l'invention sont envisagées. Mais toute autre application nécessitant une alimentation électrique, dont les éléments sont sur un vitrage, peuvent conduire à la mise en oeuvre de connexions telles que proposées par l'invention. Par mesure de simplification, la description est faite en référence aux vitrages chauffants.

Typiquement pour l'alimentation de réseaux ou de couches minces chauffantes, des bandes conductrices sont disposées à même le vitrage, sur les bords de celui-ci. Ces bandes collectrices sont le plus usuellement constituées d'un ruban métallique de quelques millimètres de largeur et de quelques centièmes de millimètres d'épaisseur. Le ruban métallique est soit fixé sur une feuille unique, soit disposé sur une des faces du vitrage au contact de l'intercalaire thermoplastique, dans le cas d'un vitrage feuilleté.

Une difficulté des connexions entre l'alimentation et le vitrage, est liée à la relative fragilité de ces rubans métalliques. La jonction entre les câbles d'alimentation électrique et le vitrage, expose cette connexion d'une part à des efforts tant que le vitrage n'est pas mis en place, et ultérieurement à toutes les vibrations propres au véhicule. La connexion mise en place doit par conséquent offrir toute la résistance requise, indépendamment des moyens supplémentaires habituellement mis en oeuvre pour protéger son intégrité, les risques de faux contacts liés à l'oxydation, etc.

En pratique, un mode usuel de connexion consiste à souder l'extrémité du ruban métallique sur le câble d'alimentation. Pour améliorer le contact, la pratique dans ce cas consiste à enrouler cette extrémité du ruban métallique, qui se prolonge au delà du bord du vitrage, sur l'extrémité du câble, préalablement dénudée, et de souder l'ensemble. Ultérieurement, pour prévenir les courts-circuits ou les risques de détérioration due aux vibrations et autres contraintes mécaniques, la connexion est avantageusement prise dans une enveloppe de matériau isolant, de type polymère, qui simultanément maintien en position la connexion en la collant au bord du vitrage.

La réalisation pratique du type de connexion indiqué ci-dessus est

En pratique, un mode usuel de connexion consiste à souder l'extrémité du ruban métallique sur le câble d'alimentation. Pour améliorer le contact, la pratique dans ce cas consiste à enrouler cette extrémité du ruban métallique, qui se prolonge au-delà du bord du vitrage, sur l'extrémité du câble, préalablement dénudée, et de souder l'ensemble. Ultérieurement, pour prévenir les courts-circuits ou les risques de détérioration due aux vibrations et autres contraintes mécaniques, la connexion est avantageusement prise dans une enveloppe de matériau isolant, de type polymère, qui simultanément maintien en position la connexion en la collant au bord du vitrage.

La réalisation pratique du type de connexion indiqué ci-dessus est relativement contraignante. L'opération est nécessairement conduite sur le vitrage équipé des éléments chauffants et rubans collecteurs. L'enroulement du ruban sur l'extrémité du câble est effectué manuellement, ce qui prend du temps, est coûteux et ne garantit pas nécessairement la plus grande fiabilité.

*La publication EP-A-0619691, propose de réaliser ce type de connexion au moyen d'une virole et d'une cosse qui sont enveloppées dans un matériau isolant moulé.*

L'invention a pour but de procurer une connexion du type indiqué précédemment, qui puisse être mise en oeuvre au moins de manière plus rapide et plus reproductible, et éventuellement de manière automatisée. Pour cela l'invention propose de supprimer la liaison directe entre l'extrémité du ruban et le câble d'alimentation. Plus précisément, selon l'invention, la connexion est réalisée par l'interposition d'un élément de connexion comportant deux parties distinctes : une première partie qui forme un manchon, de forme et dimensions correspondant à celles du câble d'alimentation, et une deuxième partie constituée de deux plaques assemblées par un côté pliable, de type formant mâchoire. Les deux plaques de cette deuxième partie sont de dimensions telles qu'elles peuvent recouvrir et emprisonner l'extrémité du ruban collecteur.

Les particularités et détails de l'invention sont présentés dans la suite de la description et des dessins dans lesquels :
- les figures 1a et 1b représentent en perspective un mode de réalisation antérieur du type de connexion envisagé selon l'invention ;
- les figures 2a et 2b représentent un mode de mise en oeuvre d'une connexion selon l'invention ;
- la figure 3 montre une autre forme de réalisation de connexion selon l'invention ;
- la figure 4 illustre en coupe partielle un type de connexion selon l'invention dans une enveloppe protectrice ;
- la figure 5 illustre les moyens utilisés selon l'invention pour réaliser une enveloppe protectrice de la connexion. Le vitrage est en coupe le long d'un ruban collecteur électrique 1. Le ruban collecteur est par exemple en cuivre étamé. Sa largeur est par exemple de 6mm et son épaisseur de 0,1mm. Les éléments chauffants ne sont pas représentés. Il s'agit par exemple de réseaux de fils de très petit diamètre, suivant un mode connu en soi. Il peut s'agir aussi, pour constituer un vitrage chauffant, d'alimenter une couche mince conductrice par exemple à base d'oxyde d'étain, déposée sur une des feuilles de verre.

Le ruban conducteur 1 se prolonge au delà du bord du vitrage pour permettre le raccordement avec l'alimentation électrique représentée par le câble correspondant 4. La gaine isolante du câble est supprimée à l'extrémité pour permettre le raccordement.

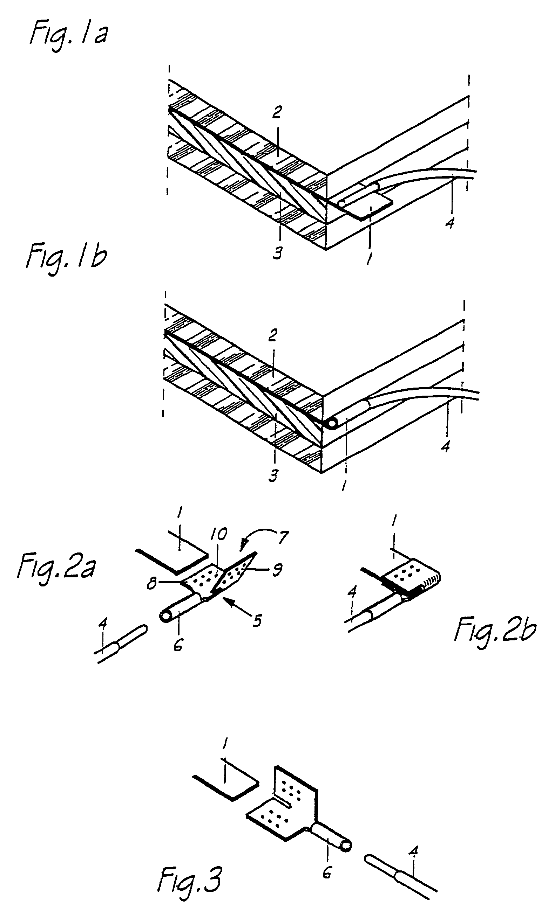

Traditionnellement, le ruban est replié et enroulé sur l'extrémité du câble comme représenté à la figure 1b. L'ensemble est ensuite soudé pour assurer la permanence de la connexion. La connexion réalisée est ensuite enveloppée, selon un mode traditionnel, dans un matériau isolant, qui simultanément fixe la connexion au bord du vitrage.

Un mode de connexion réalisé selon l'invention est présenté aux figures 2a et 2b.

Pour simplifier les dessins, seuls l'extrémité du ruban collecteur, l'extrémité du câble 4, et un élément de connexion 5 sont représentés.

L'élément de connexion, ou connecteur 5, comprend une première partie dont la forme et les dimensions sont substantiellement adaptées à celles de l'extrémité du câble 4. Dans la pratique, cette partie du connecteur est en forme de manchon cylindrique. Une deuxième partie 7 du connecteur est destinée à recevoir le ruban 1. Elle est constituée de deux plaques 8 et 9 réunies l'une à l'autre par au moins une partie d'un de leurs côtés. Les deux plaques 8 et 9 peuvent être rabattues l'une sur l'autre pour enfermer l'extrémité du ruban 1 dans la mâchoire qu'elles constituent.

L'élément de connexion est réalisé de façon connue dans une feuille métallique conductrice. Avantageusement il s'agit d'une feuille de fer étamée, de cuivre, de laiton...L'épaisseur de la feuille formant le connecteur 5 est à la fois suffisamment épaisse pour offrir une bonne rigidité une fois la connexion réalisée, et pas trop épaisse pour permettre les déformations qui assurent les contacts adéquats, sans nécessiter des efforts considérables.

La mise en oeuvre du connecteur découle à l'évidence de sa constitution. Elle comprend l'introduction de l'extrémité du câble 4 dans le manchon 6. La fixation s'effectue par écrasement du manchon sur le câble. Elle peut être améliorée en modifiant la surface interne de ce manchon. Il s'agit par exemple d'aménager des stries, ou toute autre rugosité qui s'oppose au déplacement du câble emprisonné dans le manchon.

La fixation peut bien évidemment résulter d'une soudure du câble et du manchon. Cette soudure peut aussi être combinée à l'écrasement du manchon. Si les dimensions et le matériau du connecteur sont convenablement choisis, l'écrasement suffit à garantir un bon contact électrique dont les caractéristiques ne s'altéreront pas dans le temps, en particulier lorsque la connexion est prise dans son enveloppe isolante qui la protège de l'oxydation. La soudure, si elle est pratiquée permet en outre de combler les interstices entre le câble et le manchon, et entre les fils du câble eux mêmes améliorant bien évidemment le contact.

Le contact entre le ruban 1 et le connecteur est assuré en repliant les plaques 8 et 9 l'une sur l'autre, comme représenté à la figure 2b. Le pliage est facilité en limitant la longueur de la partie commune des plaques 8 et 9. Cette partie commune doit cependant être suffisante pour maintenir fermement la position des plaques l'une part rapport à l'autre une fois qu'elles sont repliées sur le ruban.

Pour améliorer les contacts entre le ruban 1 et les plaques 8 et 9 du connecteur, ces dernières présentent avantageusement des parties faisant saillie en direction du ruban. Il peut s'agir de dents, de stries ou de tout autre relief qui lors de la fermeture de la mâchoire viendra imprimer une déformation locale limitée du ruban. Le mode le plus simple de modification du relief des plaques, consiste en des picots résultant du poinçonnement des plaques. Indépendamment de la présence ou non de ces " dents " sur les plaques, la fixation et le contact électrique peuvent être renforcés par la soudure de l'ensemble constitué par les deux plaques et l'extrémité du ruban.

La figure 2a montre les différents éléments avant qu'ils soient réunis. La figure 2b montre le connecteur avec le câble d'alimentation en position dans le manchon 6, et le ruban collecteur pris dans la mâchoire 7.

L'ordre dans lequel le câble 4 et le ruban1 sont fixés au connecteur 5 n'est pas critique. Pour la commodité de l'opération, on procède de préférence à la fixation du câble, puis à celle du ruban.

Aux figures 2a et 2b la position du connecteur est telle que le câble soit sensiblement parallèle au bord du vitrage. Cette disposition permet de limiter l'encombrement relatif de cette connexion. En effet, la protubérance que constitue l'ensemble de la connexion, de son enveloppe, et du câble d'alimentation, peut être difficilement logeable dans les baies de carrosserie des véhicules. Un moindre encombrement est aussi préférable pour le stockage et le transports des vitrages. Néanmoins d'autres dispositions sont possibles, comme celle représentée à la figure 3. Dans celle-ci le câble d'alimentation se trouve dans l'alignement du ruban collecteur.

Si les contacts électriques sont convenablement assurés par les dispositions décrites précédemment, il est important d'isoler l'ensemble et de faire en sorte que, soumis aux conditions d'utilisation envisagées, il ne s'altère pas. C'est dans ce but que traditionnellement on enveloppe la connexion dans un matériau isolant qui, simultanément, fixe celle-ci au bord du vitrage. De cette façon, on prévient notamment les flexions du ruban au bord du vitrage, c'est à dire au point le plus fragile.

Le matériau isolant est en conséquence également choisi en fonction de son aptitude à adhérer solidement au vitrage. On utilise avantageusement un produit moulable tel qu'un polyuréthanne, un chlorure de polyvinyle, divers polyesters et analogues. Les qualités d'adhérence du polyuréthanne en font un produit bien adapté à cet usage.

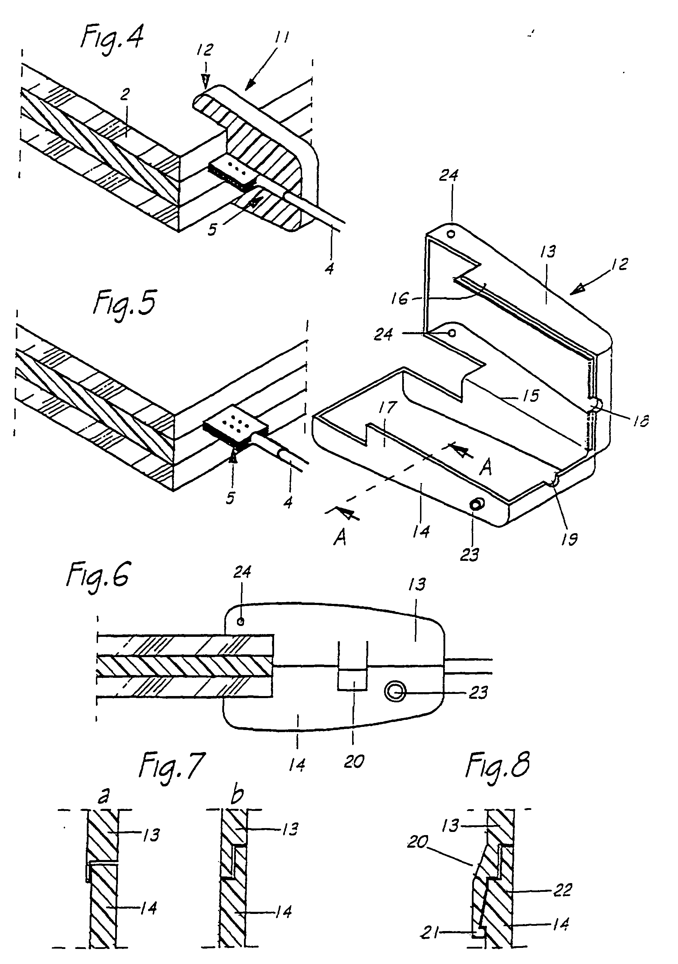

La figure 4 montre la connexion selon l'invention dans son enveloppe isolante11, cette dernière en coupe pour faire apparaître la disposition des divers éléments. La représentation montre la connexion 5 entièrement noyée dans le matériau de l'enveloppe 11. L'enveloppe 11 englobe également le câble sur une petite longueur, protégeant ainsi la zone de raccordement avec le connecteur. De cette façon l'isolation électrique est convenablement assurée, de même que la protection mécanique des points fragiles. L'enveloppe 11 permet notamment la fixation de l'ensemble au bord du vitrage. Pour que cette fixation soit convenablement assurée, l'enveloppe 11 est avantageusement prolongée comme représenté en 12, par une avancée sur les faces du vitrage.

Le moulage de l'enveloppe isolante sur la connexion est une opération qui immobilise l'ensemble du vitrage sur le poste de moulage jusqu'à la prise en masse du matériau. La durée de cette opération dépend bien évidemment du type de matériau mis en oeuvre. Les produits isolants thermofusibles qui sont certainement ceux pour lesquels le temps de durcissement serait le plus court, ne sont généralement pas utilisés pour ce type de produit en raison même de leur sensibilité à la chaleur. Le plus souvent on utilisera des produits macromoléculaires produits par réaction au moment du moulage. Le temps de réaction de ces produits est souvent de plusieurs minutes pendant lesquelles le vitrage reste sur le poste de moulage. Le poste de moulage est indisponible pendant tout ce temps, ce qui nécessite la multiplication des postes pour obtenir une cadence de production satisfaisante. Ainsi dans le cas d'enveloppes réalisées en polyuréthanne, matériau qui est très utilisé avec les vitrages automobiles, le temps de réaction avant de pouvoir procéder au démoulage peut être de l'ordre de 5 minutes. Il est souhaitable de pouvoir s'affranchir de cette contrainte. La vitesse du processus de réticulation ayant été optimisée, une amélioration supplémentaire nécessite d'autres dispositions.

Pour améliorer cette étape du processus de formation de l'enveloppe de la connexion, l'invention propose de rompre avec la pratique antérieure visant à l'utilisation de stations de moulage complexes, comportant non seulement les moyens de conditionnement de la composition, mais encore des moules permettant une régulation cyclique de la température en fonction de la progression de l'opération. L'invention propose le remplacement des moules traditionnels par de simples coquilles qui sont séparables de la station d'injection du matériau. Une fois remplies, les coquilles suivent le vitrage sur une aire de stockage ou progressent dans les traitements ultérieurs, sans attendre le durcissement de la composition.

La figure 5 présente le type de moyens utilisables pour procéder à cette formation de l'enveloppe isolante en s'affranchissant de la contrainte induite par le temps de durcissement du matériau constituant cette enveloppe. De manière générale, les connexions une fois établies, une coquille 12 est mise en place qui recouvre complètement la connexion. Dans la forme présentée, la coquille 12 est constituée de deux demi coquilles 13 et 14.

Ces demi coquilles sont réunies par un côté commun 15 qui fait office de charnière. Si le matériau de la coquille et son épaisseur sont convenablement choisis, la charnière 15 est formée par un simple amincissement de la paroi latérale de la coquille le long de la ligne d'articulation.

La géométrie de la coquille est conditionnée par l'utilisation de celle-ci. Cette dernière est soit maintenue en position sur le vitrage de façon permanente, soit retirée après que le matériau de l'enveloppe isolante soit suffisamment rigidifié. Dans le premier cas, il convient essentiellement que la coquille participe à la protection de la connexion. Par ailleurs n'ayant pas de contrainte de démoulage, la rigidité de la coquille, indépendamment du matériau choisi, peut être obtenue par des nervures internes, qui s'opposeraient à un démoulage aisé. Dans ce cas toujours il est préférable que la surface externe de la coquille soit exempte de parties saillantes. Dans le second cas, à l'inverse, il faut faire en sorte que les faces internes soient aussi lisses que possible pour faciliter le démoulage. Si des nervures sont nécessaires elles sont placées à l'extérieur.

En pratique les pressions subies par la coquille sont normalement suffisamment faibles pour que la rigidité des parois suffise et que le nervurage soit superflu. Le mode représenté à la figure 5 ne comporte aucune nervure intérieure ou extérieure.

Le matériau de la coquille est avantageusement synthétique du type polystyrène, chlorure de polyvinyle, polyéthylène etc. Le choix du matériau est bien entendu tributaire de la nature du matériau moulé. Le matériau de la coquille doit nécessairement résister au contact du matériau moulé dans les conditions de son utilisation. Si le matériau est thermoplastique et injecté à l'état fondu, il faut choisir une coquille qui ne se ramollisse pas au contact du matériau fondu. La coquille doit aussi résister chimiquement aux composants du matériau utilisés pour former l'enveloppe.

La coquille 12 est aménagée, du côté tourné vers le vitrage, de telle sorte qu'une fois refermée, comme à la figure 6, elle recouvre sur une petite partie les faces du vitrage. Le profil est tel que les bords 16, 17, de la coquille s'ajustent exactement à l'épaisseur du vitrage, garantissant l'étanchéité de l'ensemble moule-vitrage. Pour faciliter l'étanchéité, il est possible de prévoir une lèvre sur les bords de la coquille au contact du vitrage. Cette lèvre d'étanchéité peut être constituée par une prolongation de la paroi de très faible épaisseur, la fermeture du moule s'accompagnant d'une déformation élastique de la lèvre au contact du vitrage. Cette lèvre n'est pas représentée aux figures 5 et 6.

Toujours pour des raisons d'étanchéité de la coquille, les bords des parois 13, 14, des demi coquilles qui sont au contact l'une de l'autre en position fermée, forment avantageusement des feuillures qui permettent un recouvrement partiel. Des exemples de ces feuillures sont donnés à titre indicatif aux figures 7a et 7b.

La coquille représentée à la figure 5 comporte encore des découpes 18, 19, pour le passage du câble d'alimentation 4. Un orifice d'injection 23 est schématisé sur la face 14. Une buse d'injection, non représentée, par laquelle le matériau moulé est conduit dans la coquille 12, s'adapte sur cet orifice 23. Des évents 24 sont disposés également dans les parois de la coquille pour évacuer l'air pendant l'injection du matériau. Un seul orifice d'injection 23 est représenté. Il est possible d'en prévoir plusieurs, bien que les dimensions limitées de la coquille ne le nécessitent normalement pas.

La fermeture de la coquille doit être assurée de façon stable pendant l'injection et la période de prise en masse du matériau injecté. La fermeture peut être assurée par des moyens extérieurs à la coquille, ou, comme sur les figures 6 et 8, par des éléments intégrés à celle-ci. L'élément de fermeture 20 est par exemple du type "cliquet". La forme représentée à la figure 8 comporte sur la paroi 13, une extension en forme de crochet 21 qui est adaptée à une dent 22, ménagée sur la paroi 14. Dans la forme indiquée le crochet 21 et la dent 22 sont parties intégrantes des parois 13 et 14. La nature semi-rigide du matériau se prête à formation de ces moyens pour l'encliquetage envisagé.

Si dans l'exemple présenté les deux demi coquilles font partie de la même pièce, elles peuvent, sans que cela change fondamentalement leur utilisation, constituer deux pièces distinctes qui ne sont assemblées que pour l'opération de moulage. En particulier il est possible de façon connue, de procéder à l'assemblage des deux demi coquilles par un emboîtement périphérique de type encliquetage sur toute la longueur des bords qui se font face.

## Revendications

1. Vitrage automobile équipé d'un ou plusieurs éléments fonctionnels nécessitant une alimentation électrique, élément qui comporte au moins un ruban métallique conducteur distribuant le courant sur le vitrage, ruban qui est connecté au câble d'alimentation électrique, dans lequel la connexion entre le ruban de distribution et le câble d'alimentation est pris dans une enveloppe d'un matériau isolant moulé sur la connexion et sur le bord du vitrage, le moulage étant effectué dans une coquille qui demeure en position au moins jusqu'à durcissement du matériau isolant moulé, cette coquille étant indépendante des moyens de la station d'injection du matériau moulé, et pouvant être séparée de ces derniers dès l'injection effectuée.

2. Vitrage selon la revendication 1, dans lequel la coquille utilisée pour le moulage du matériau isolant sur la connexion est constituée de deux moitiés formant une seule pièce, réunies par un côté pliable.

3. Vitrage selon la revendication 1 ou la revendication 2, dans lequel l'enveloppe de matériau isolant recouvre une partie des faces du vitrage, et est en contact sensiblement étanche avec celles-ci.

4. Vitrage selon la revendication 3, dans lequel la coquille utilisée pour mouler l'enveloppe de la connexion, comporte sur ses parois au contact avec le bord et les faces du vitrage des lèvres souples assurant l'étanchéité par compression de ces lèvres, lorsque la coquille est en position pour l'injection du matériau moulé.

5. Vitrage selon l'une des revendications 1 à 4, dans lequel la coquille est en matériau isolant électrique, et est maintenue sur le vitrage après durcissement du matériau isolant moulé.

6. Vitrage selon l'une des revendications 1 à 5 dans lequel la connexion entre le ruban métallique et le circuit d'alimentation est obtenu au moyen d'un élément de connexion comportant deux parties fonctionnelles distinctes : une première partie formant manchon dans laquelle s'insère l'extrémité du câble d'alimentation électrique ; une deuxième partie comprenant deux plaques formant mâchoire, ces plaques ayant une partie commune pliable, l'extrémité du ruban distribuant le courant étant pris entre les deux plaques repliées l'une contre l'autre.

7. Vitrage selon la revendication 6 dans lequel l'extrémité du câble d'alimentation est fixé dans la partie de l'élément de connexion formant manchon, par pincement de ce dernier.

8. Vitrage selon la revendication 6, ou la revendication 7, dans lequel l'extrémité du câble est soudée dans la partie formant manchon.

9. Vitrage selon l'une des revendications 6 à 8, dans lequel les plaques de l'élément de connexion formant mâchoire sont pourvues de reliefs capables d'imprimer de légères déformations au ruban lorsque ces plaques sont refermées sur ledit ruban.

10. Vitrage selon l'une des revendications 6 à 9, dans lequel l'extrémité du ruban prise entre les plaques de l'élément de connexion est également soudée à ces plaques.

## Claims

1. Automotive glazing fitted with one or more functional elements requiring the supply of electric power, said element comprising at least one metal strip conductor, which distributes the current over the glazing and is connected to the electric supply cable, wherein the connection between the distribution strip and the supply cable is held in a sheath made of insulating material moulded onto the connection and onto the edge of the glazing, said moulding being conducted in a mould, which remains in position at least until the moulded insulating material has hardened and which is independent of the means of the injection station for the moulded material and can be separated from these means as soon as the injection moulding has been carried out.

2. Glazing according to Claim 1, wherein the mould used for moulding the insulating material onto the connection comprises two halves forming a single piece joined by a flexible side.

3. Glazing according to Claim 1 or Claim 2, wherein the sheath of insulating material covers a portion of the faces of the glazing and is in contact with them in a substantially sealed manner.

4. Glazing according to Claim 3, wherein on its walls in contact with the edge and the faces of the glazing, the mould used for moulding the sheath of the connection has flexible lips to assure a compression seal of these lips when the mould is in position for injection of the moulded material.

5. Glazing according to one of Claims 1 to 4, wherein the mould is made of electrical insulating material and is retained on the glazing after the moulded insulating material has hardened.

6. Glazing according to one of Claims 1 to 5, wherein the connection between the metal strip and the supply circuit is formed by means of a connecting element having two separate functional parts: a first part forming a sleeve, into which the end of the electric supply cable is inserted, and a second part comprising two plates forming a clamp and having a common flexible part, the end of the strip that distributes the current being held between the two plates when these are folded one against the other.

7. Glazing according to Claim 6, wherein the end of the supply cable is fastened in the part of the connecting element forming the sleeve by gripping the latter.

8. Glazing according to Claim 6 or Claim 7, wherein the end of the cable is soldered into the part forming the sleeve.

9. Glazing according to one of Claims 6 to 8, wherein the plates of the connecting element forming the clamp are provided with raised areas capable of impressing slight deformations on the strip when these plates are closed over said strip.

10. Glazing according to one of Claims 6 to 9, wherein the end of the strip held between the plates of the connecting element is also soldered to these plates.

## Patentansprüche

1. Autoglasscheibe bzw. Autoverglasung, die mit einem oder mehreren funktionellen Element(en) ausgestattet ist, das bzw. die eine elektrische Speisung erfordert (erfordem), wobei das Element wenigstens ein metallisches Leiterband umfaßt, welches den Strom auf die Glasscheibe verteilt, wobei das Band mit dem elektrischen Speise- bzw. Zufuhrkabel verbunden ist, in welchem die Verbindung zwischen dem Verteilungsband und dem Zufuhrkabel in einer Umhüllung aus einem isolierenden Material aufgenommen ist, welche auf die Verbindung und auf den Rand der Glasscheibe geformt bzw. gegossen ist, wobei das Formen bzw. Gießen in einer Kokille bzw. Form ausgeführt ist, welche bis zur Aushärtung des isolierenden gegossenen Materials in Position verbleibt, wobei die Kokille von Mitteln der Einspritzstation des gegossenen Materials unabhängig ist und von den letzteren nach erfolgter Einspritzung getrennt werden kann.

2. Glasscheibe nach Anspruch 1, in welcher die für das Formen des isolierenden Materials auf die Verbindung verwendete Kokille aus zwei Hälften gebildet ist, die ein einziges Stück bilden, die durch eine faltbare Seite verbunden sind.

3. Glasscheibe nach Anspruch 1 oder Anspruch 2, in welcher die Umhüllung des isolierenden Materials ein Teil der Seiten der Glasscheibe bedeckt und im wesentlichen in dichtem Kontakt mit diesen ist.

4. Glasscheibe nach Anspruch 3, in welcher die für das Formen der Umhüllung der Verbindung verwendete Kokille auf ihren Wänden in Kontakt mit dem Rand und den Flächen bzw. Seiten der Verglasung weiche bzw. nachgiebige Lippen umfaßt, welche die Dichtheit durch Kompression dieser Lippen sicherstellen, wenn die Kokille in einer Position für die Einspritzung des geformten Materials ist.

5. Glasscheibe nach einem der Ansprüche 1 bis 4, in welcher die Kokille aus elektrisch isolierendem Material besteht und auf der Glasscheibe nach Aushärtung des geformten isolierenden Materials beibehalten ist.

6. Glasscheibe nach einem der Ansprüche 1 bis 5. in weicher die Verbindung zwischen dem metallischen Band und dem Zufuhrschaltkreis mittels eines Verbindungselements erhalten ist bzw. wird, das zwei gesonderte funktionelle Teile umfaßt: ein erstes Teil, das eine Muffe bildet, in welcher sich das Ende des elektrischen Zufuhrkabels erstreckt; und ein zweites Teil, umfassend zwei Platten, welche eine Backe bzw. Klemmbacke bilden, wobei die Platten ein gemeinsames form- bzw. faltbares Teil aufweisen, wobei das Ende des den Strom verteilenden Bands zwischen die zwei aufeinander gefalteten Platten aufgenommen ist.

7. Glasscheibe nach Anspruch 6, in welcher das Ende des Zufuhrkabels an dem Teil des Verbindungselements, das eine Muffe ausbildet, durch Klemmen der letzteren festgelegt ist.

8. Glasscheibe nach Anspruch 6 oder Anspruch 7, in welcher das Ende des Kabels in dem eine Muffe bildenden Teil verschweißt bzw, verlötet ist.

9. Glasscheibe nach einem der Ansprüche 6 bis 8, in welcher die Platten des Verbindungselements, welche eine Klemmbacke ausbilden, mit Reliefen bzw. Erhöhungen versehen sind, die fähig sind, leichte Deformationen auf das Band einzudrücken, wenn die Platten auf dem Band geschlossen sind.

10. Glasscheibe nach einem der Ansprüche 6 bis 9, in welcher das Ende des Bands, das zwischen die Platten des Verbindungselements ergriffen ist, auch mit diesen Platten verschweißt bzw. verlötet ist
